# EUROPÄISCHE PATENTSCHRIFT

(11) **EP 1 289 345 B1**
(45) Veröffentlichungstag und Bekanntmachung des Hinweises auf die Patenterteilung: **16.03.2005**
(21) Anmeldenummer: 02016962.9
(22) Anmeldetag: 01.08.2002
(51) Int. Cl.: H05B 39/04, G01J 1/42, G05D 25/02

(54) **Verfahren und Einrichtung zum Steuern der Helligkeit in einem mit Innenlicht und Aussenlicht beleuchteten Raum**
Method and device for controlling the light intensity in a room illuminated by daylight and artificial light
nrocédé et dispositif d'éclairage d'un local illuminé par la lumière du jour et par de la lumière artificielle

(30) Priorität: 17.08.2001 DE 10140415
(43) Veröffentlichungstag der Anmeldung: 05.03.2003
(73) Patentinhaber: Luxmate Controls GmbH, 6850 Dornbirn (AT)
(72) Erfinder: Werner, Walter Dr., 6850 Dornbirn (AT); Geiginger, Joachim Dipl.-Ing., 6845 Hohenems (AT); Jödicke, Bernd Prof. Dr., 78256 Steisslingen (DE); Mattner, Thomas Dipl.-Ing., 88213 Ravensburg (DE)
(74) Vertreter: Schmidt-Evers, Jürgen, Dipl.-Ing.

(56) Entgegenhaltungen:
- EP-A- 0 410 484
- EP-A- 0 652 690
- WO-A-96/15649
- US-A- 4 491 727
- US-A- 4 538 218
- DATABASE INSPEC [Online] INSTITUTE OF ELECTRICAL ENGINEERS, STEVENAGE, GB; LITTLEFAIR P J: "Measurements of the luminous efficacy of daylight" Database accession no. 3385948 XP002193009 & LIGHTING RESEARCH AND TECHNOLOGY, 1988, UK, Bd. 20, Nr. 4, Seiten 177-188, ISSN: 0024-3426

## Beschreibung

Die vorliegende Erfindung betrifft ein Verfahren zum Steuern oder Regeln der Helligkeit in einem mit Innenlicht und Außenlicht beleuchteten Raum gemäß dem Oberbegriff des Anspruches 1 bzw. eine Einrichtung zum Durchführung dieses Verfahrens.

Ein wesentlicher Bestandteil des modernden Gebäudemangagements besteht in einer der Raumnutzung angepaßten Beleuchtungsregelung sowie einer Optimierung des damit verbundenen Energieverbrauchs. Um den Energieverbrauch zur Beleuchtung von Gebäuden zu senken, ist es unerläßlich, das vorhandene Tageslicht mit einzubeziehen und zu nutzen. Dies wird beispielsweise durch Regelungssysteme erreicht, die einen in dem zu beleuchtenden Raum angeordneten Helligkeitssensor aufweisen, wobei eine mit dem Sensor verbundene Steuerschaltung in Abhängigkeit von dem Sensorsignal Dimmsignale für die in dem Raum angeordneten Leuchten erzeugt. Hierdurch besteht die Möglichkeit, unabhängig von dem aktuell vorliegenden Außenlicht eine konstante Helligkeit innerhalb des Raumes zu erzielen.

Ein Nachteil eines derartigen Systems mit in jedem Raum angeordneten Helligkeitssensoren besteht allerdings darin, daß die Helligkeitssteuerung durch innerhalb des Raumes befindliche Gegenstände in ungewünschter Weise beeinflußt werden kann. Ist beispielsweise bei einem Büroraum innerhalb des Detektionsbereiches des Helligkeitssensors ein Schreibtisch angeordnet, so kann der Fall auftreten, daß der Helligkeitssensor aufgrund von auf dem Schreibtisch liegendem und das Licht reflektierendem Papier eine hohe Helligkeit feststellt. In Folge davon wird das Innenlicht verstärkt gedimmt, so daß in dem Raum insgesamt eine zu geringe Helligkeit vorliegt.

Um derartige Probleme zu vermeiden, sind Systeme bekannt, welche ausschließlich das vorhandene Außenlicht bzw. Tageslicht bestimmen und hierfür eine einzige außerhalb des Gebäudes angeordnete Außenlicht-Meßvorrichtung aufweisen, mit der sowohl die Intensität als auch die Richtungsabhängigkeit des Außenlichts bestimmt wird. Ferner ist für jeden Raum die Lage sowie die Anordnung der Fenster bekannt, da jeder Raum aufgrund des sich verändernden Sonnenstandes unterschiedlich stark von dem Außenlicht erhellt wird. Diese Informationen berücksichtigend wird dann in Abhängigkeit von dem richtungsabhängigen Außenlicht für jeden Raum ein individuelles Stellsignal für die Leuchten erzeugt. Ein zusätzlicher Vorteil dieses Verfahrens, welches beispielsweise in der EP 0 410 484 A1 beschrieben ist, besteht darin, daß es nicht notwendig ist, in jedem Raum einen eigenen Helligkeitssensor anzubringen.

Ferner ist aus der US 4,538,218 ein Verfahren zum Steuern der Helligkeit in einem mit Innenlicht und Außenlicht beleuchteten Raum bekannt, bei dem die richtungsunabhängige Streustrahlung als Steuergröße zum Ansteuern der Lichtquellen in dem Raum benutzt wird.

Zum Bestimmen der Intensität und Richtungsabhängigkeit des Außenlichts wird beispielsweise von der Anmelderin ein Tageslichtmeßkopf mit der Bezeichnung LM-TLM vertrieben. Dieser bekannte Meßkopf besitzt acht einzelne Fotosensoren, wovon jeweils zwei einer Himmelsrichtung zugeordnet sind. Die Anordnung der Fotosensoren ist derart, daß die horizontalen und vertikalen Beleuchtungsstärken des Außenlichtes umfassend bestimmt werden können.

Eine insgesamt lediglich fünf Sensoren verwendende Meßvorrichtung ist ferner aus der Veröffentlichung "Measurements of the luminous efficacy of daylight" von P. J. Littlefair in Lighting Research and Technology, 1988, UK, Bd 20, Nr. 4 Seiten 177-188 bekannt. Diese Vorrichtung besteht aus vier horizontal ausgerichteten Sensoren sowie einem fünften, auf einer Ebene angeordneten Sensor.

In beiden zuvor genannten Fällen wird zwar eine direkte Bestimmung des richtungsabhängigen Außenlichts ermöglicht, die Anordnung von acht bzw. fünf Sensoren erfordert allerdings einen nicht unerheblichen sowohl elektrischen als auch mechanischen Aufwand und ist mit entsprechenden Kosten verbunden.

Der vorliegenden Erfindung liegt daher die Aufgabe zugrunde, ein Verfahren und eine Einrichtung zum Steuern oder Regeln der Helligkeit unter Berücksichtigung des Außenlichts anzugeben, wobei die Bestimmung des richtungsabhängigen Außenlichts auf möglichst einfache Weise erfolgt.

Die Aufgabe wird durch ein Verfahren zum Steuern oder Regeln der Helligkeit in einem mit Innenlicht und Außenlicht beleuchteten Raum, welches die Merkmale des Anspruches 1 aufweist, gelöst. Dieses zeichnet sich darin aus, daß das Ermitteln der richtungsabhängigen Außenlicht-Intensität in mehreren Schritten erfolgt. Dabei wird zunächst die durch Bewölkung verursachte Dämpfung der Sonnen-Direkteinstrahlung bestimmt. Anschließend werden in Abhängigkeit von der zuvor bestimmten Dämpfung die richtungsabhängige gedämpfte Sonnen-Direkteinstrahlung sowie die richtungsunabhängigen Streustrahlung ermittelt.

Erfindungsgemäß wird somit nicht mehr das aus den verschiedenen Richtungen einfallende Außenlicht direkt gemessen, sondern auf Grundlage der zuvor ermittelten Dämpfung, die Auskunft darüber gibt, ob der Himmel bewölkt ist oder nicht, berechnet. Zur Bestimmung der Dämpfung ist es im einfachsten Fall ausreichend, einen einzigen Helligkeitssensor zu verwenden, der einen Außenhelligkeitswert erfaßt. Damit kann ein Meßkopf mit einem wesentlich vereinfachten Aufbau verwendet werden.

Die Information über die Dämpfung oder den Zustand des Himmels ist deswegen von Bedeutung, da die Bewölkung einen wesentlichen Einfluß auf die Richtungsabhängigkeit des Außenlichts hat. Bei einem klaren Himmel erfolgt beispielsweise die Einstrahlung zum wesentlichen Teil aus Richtung der Sonne, während bei einem bewölkten Himmel die Sonnenstrahlung derart gestreut wird, daß das Außenlicht von allen Seiten her einfällt. Ob der Himmel nun klar oder bewölkt ist, kann beispielsweise durch einen Vergleich eines mit Hilfe einer Außenlicht-Meßvorrichtung gemessenen Außenlicht-Istwerts mit einem Referenzwert bestimmt werden, wobei der Referenzwert dem einfallendem Außenlicht bei klarem Himmel entspricht und beispielsweise unter Berücksichtigung der Zeit, des Datums und der geographischen Position berechnet werden kann. Bei Kenntnis des Himmelszustands bzw. der Dämpfung kann dann die Intensität der Sonnen-Direkteinstrahlung, deren Richtung bekannt ist, und der richtungsunabhängigen Streustrahlung und damit das richtungsabhängige Außenlicht insgesamt abgeschätzt werden.

Dieses Verfahren, welches auf der Erfassung eines einzigen Helligkeitswertes beruht, hat den Vorteil, daß der Tageslichtmeßkopf bzw. Außenlicht-Meßvorrichtung sehr einfach aufgebaut sein kann, da lediglich ein einziger Sensor notwendig ist. Die Intensität und Richtungsabhängigkeit des Außenlichts kann hierbei zwar nur mit einer begrenzten Genauigkeit abgeschätzt werden, die Ergebnisse sind allerdings für eine zufriedenstellende Helligkeitssteuerung bzw. -regelung ausreichend. Um die Genauigkeit bei der Bestimmung der Dämpfung und damit des Außenlichts zu erhöhen, kann allerdings vorgesehen sein, daß zusätzlich eine horizontale Komponente des Außenlichts berücksichtigt wird, indem beispielsweise das Licht aus drei Richtungen, die jeweils einen Winkel von 120° einschließen, erfaßt wird. Durch eine Vergleich der verschiedenen Helligkeitswerte kann - wie später ausführlich erläutert wird - der Zustand des Himmels mit einer größeren Genauigkeit festgestellt werden.

Die oben genannte Aufgabe wird ferner durch eine Einrichtung zum Steuern oder Regeln der Helligkeit in einem mit Innenlicht und Außenlicht beleuchteten Raum gelöst, die eine Außenlicht-Meßvorrichtung, eine Beleuchtungsanlage für den Raum und eine Steuer- bzw. Regelvorrichtung aufweist, welche mit der Außenlicht-Meßvorrichtung verbunden ist und in Abhängigkeit von der richtungsabhängigen Außenlicht-Intensität ein Steuer- oder Regelwert für die Beleuchtungsanlage erzeugt. Dabei bildet die Außenlicht-Meßvorrichtung aus dem aus einer Richtung oder aus einem Bereich einfallendem Außenlicht einen Außenlicht-Istwert, wobei die Steuer- bzw. Regelvorrichtung dann auf Basis eines Vergleichs dieses Außenlicht-Istwerts mit einem unter Berücksichtigung der Zeit, des Datums und der geographischen Position erstellten Referenzwert die richtungsabhängige Außenlicht-Intensität ermittelt und den Steuer- oder Regelwert für die Beleuchtungsanlage erzeugt.

Der Außenlicht-Meßvorrichtung bzw. der Tageslichtmeßkopf weist dabei vorzugsweise einen Helligkeitssensor auf, der auf einer horizontal ausgerichteten Oberfläche angeordnet ist. Vorzugsweise sind drei weitere Helligkeitssensoren vorgesehen, die jeweils horizontal ausgerichtet und in einer Dreiecksanordnung angeordnet sind. Der bzw. die Helligkeitssensoren sind dabei vorzugsweise unter einer diffusen Abdeckung angeordnet, die eine halbkugelförmige Oberfläche aufweist, wobei der erste Helligkeitssensor im Zentrum der Halbkugel angeordnet ist.

Im folgenden soll die Erfindung anhand der beiliegenden Zeichnung näher erläutert werden. Es zeigen:
- Fig. 1: ein erstes Beispiel eines Tageslichtmeßkopfes zur Durchführung des erfindungsgemäßen Verfahren;
- Fig. 2: ein weiteres Beispiel eines Tageslichtmeßkopfes in seitlicher Ansicht;
- Fig. 3: eine Darstellung der Anordnung der horizontal ausgerichteten Helligkeitssensoren des Tageslichtmeßkopfes aus Fig. 2; und
- Fig. 4 bis 6: Darstellungen eines erfindungsgemäßen Systems zur Steuerung der Helligkeit bei unterschiedlichen Himmelszuständen.

Bevor das erfindungsgemäße Verfahren beschrieben wird, sollen zunächst zwei für die Durchführung des Verfahrens geeignete Tageslichtmeßköpfe erläutert werden.

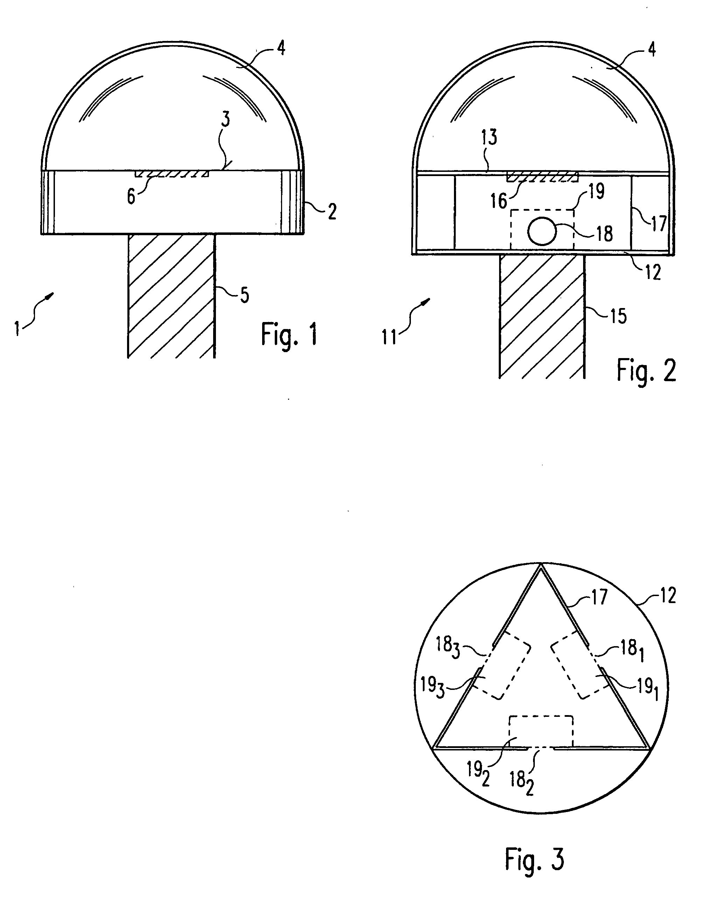

Fig. 1 zeigt dabei einen ersten Tageslichtmeßkopf 1, der lediglich einen einzigen Helligkeitssensor 6 aufweist, der auf der horizontal ausgerichteten Oberseite 3 eines zylinderförmigen Sensorgehäuses 2 angeordnet ist. Zum Schutz vor äußeren Einflüssen ist eine halbkugelförmige Abdeckung 4 vorgesehen, die vorzugsweise aus einem das Licht diffus streuenden Material besteht. Der Helligkeitssensor 6 ist im Zentrum der halbkugelförmigen Abdeckung 4 angeordnet, zur Halterung des Sensors 1 dient ein vertikal angeordnetes Montagerohr 5, an dessen Oberseite das Sensorgehäuse 2 befestigt ist.

Der Sensor 6 ist vollständig unverschattet an der Oberseite 3 des Gehäuses 2 angeordnet, so daß möglichst das gesamte, aus allen Richtungen auf die kuppelförmige Abdeckung 4 einfallende Außenlicht erfaßt wird. Das Signal dieses Sensors 6 ist somit ein Maß für die globale Gesamthelligkeit des Außenlichts, es gibt allerdings keine Auskunft über dessen Richtungsabhängigkeit.

Die Figuren 2 und 3 zeigen einen zweiten Meßkopf 11, der insgesamt vier Sensoren 16 und 19₁ bis 19₃ aufweist. Der erste Sensor 16 ist dabei wiederum auf der horizontal ausgerichteten Deckplatte 13 eines Sensorgehäuses 17 angeordnet und dient zum Erfassen der globalen Gesamthelligkeit des Außenlichts. Innerhalb des Sensorgehäuses 17 sind ferner drei weitere, horizontal ausgerichtete Sensoren 19₁ bis 19₃ angeordnet, welche jeweils um 120° versetzt und gegeneinander abgeschattet sind. Das Sensorgehäuse 17 besitzt - wie in Fig. 3 dargestellt - dementsprechend eine einem gleichseitigen Dreieck entsprechenden Außenform, wobei in der Mitte jeder Seitenwand jeweils eine Öffnung 18₁ bis 18₃ für die dahinter angeordneten Sensoren 19₁ bis 19₃ vorgesehen ist. Durch dies Anordnung ist gewährleistet, daß zumindest einer der Sensoren 19₁ bis 19₃ immer gegen eine direkte Sonneneinstrahlung verschattet ist.

Um den Öffnungswinkel für Licht, welches in der Umgebung reflektiert wird und dementsprechend von der Unterseite her einfallen würde, möglichst gering zu halten, sind die drei horizontal ausgerichteten Sensoren 19₁ bis 19₃ am unteren Rand des Gehäuses 17 angeordnet und werden ferner von der kreisrunden Bodenplatte 12 abgeschattet. Dementsprechend ist der Öffnungshalbraum für diese Sensoren 19₁ bis 19₃ in Richtung des Himmelhalbraums, also nach oben ausgerichtet.

Die vier Sensoren 16 und 19₁ bis 19₃ werden von einer Abdeckung 14 geschützt, die im oberen Bereich wiederum halbkugelförmig ausgebildet ist, wobei der die Gesamthelligkeit erfassende Sensor 16 im Zentrum der Halbkugel angeordnet ist. Im unteren Bereich des Sensorgehäuses 17 ist die Abdeckung 14, die wiederum vorzugsweise aus einem das Licht diffus streuenden Material besteht, zylinderförmig ausgebildet, die Gesamtanordnung ist auch hier auf einem vertikal ausgerichteten Montagerohr 15 angeordnet.

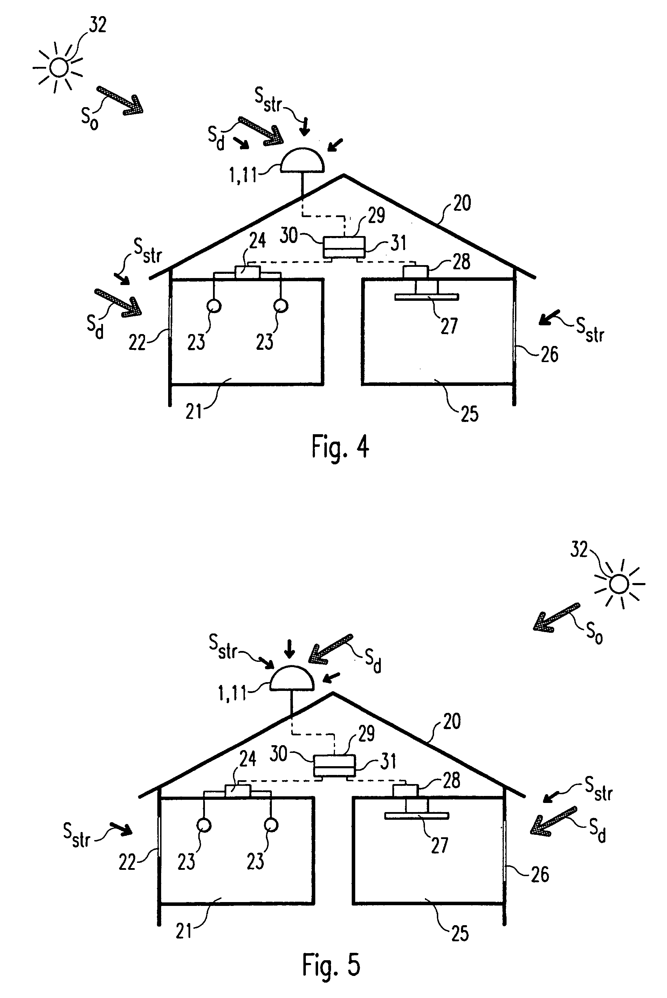

Fig. 4 zeigt ein Gesamtsystem zum Steuern bzw. Regeln der Helligkeit in den verschiedenen Räumen eines Gebäudes, wobei die Räume sowohl mit Innenlicht als auch mit Außenlicht beleuchtet werden. Im dargestellten Beispiel sind in einem Haus 20 zwei Räume 21 und 25 dargestellt, die jeweils ein Fenster 22 bzw. 26 aufweisen, wobei sich die beiden Fenster 22 und 26 allerdings an gegenüberliegenden Seiten des Gebäudes 20 befinden.

Innerhalb der beiden Räume 21 und 25 sind jeweils Beleuchtungsanlagen bzw. Leuchten 23, 27 angeordnet, die für eine künstliche Beleuchtung der Räume 21, 25 vorgesehen sind. Die Helligkeitssteuerung der Leuchten 23 und 27 soll dabei in Abhängigkeit von dem durch die Fenster 22 bzw. 26 einfallenden Außenlicht erfolgen. Hierzu ist am Dach des Gebäudes 20 eine Außenlicht-Meßvorrichtung in Form eines Tageslichtmeßkopfes 1 bzw. 11 vorgesehen, wie er in den Fig. 1 oder 2 und 3 dargestellt ist. Die Signale des Meßkopfes 1, 11 werden einer Steuer- bzw. Regelvorrichtung 29 zugeführt, welche in Abhängigkeit von dem Außenlicht Dimmsignale erzeugt, die an entsprechende Betriebsgeräte 24 bzw. 28 zum Betreiben der Leuchten 23 und 27 weitergeleitet werden.

Die Steuer- bzw. Regelvorrichtung 29 ist im dargestellten Beispiel in zwei Untereinheiten 30 und 31 unterteilt, wobei die erste Einheit 30 die von dem Meßkopf 1 bzw. 11 gelieferten Daten auswertet und daraus - wie noch beschrieben wird - die Intensität und Richtungsabhängigkeit des Außenlichts bestimmt. Auf Grundlage dieser Daten werden von der zweiten Untereinheit 31 die Dimmsignale für die Leuchten 23 und 27 erzeugt und an die Lampen-Betriebsgeräte 24 und 28 übermittelt. Diese Aufteilung der Steuer- bzw. Regelvorrichtung 29 in die beiden Untereinheit 30 und 31 ist allerdings nicht unbedingt notwendig und erfolgt hier in erster Linie zur besseren Verständlichkeit des nachfolgend erläuterten erfindungsgemäßen Verfahrens. Beispielsweise könnte die Steuer- bzw. Regelvorrichtung 29 auch durch einen einzigen Rechner gebildet werden, so daß eine Trennung zwischen den beiden Einheiten 30 und 31 nicht mehr möglich ist. Auf der anderen Seite besteht auch die Möglichkeit, die Funktion der Einheit 31, also aus den Informationen über das Außenlicht Sollwerte für die Leuchten 23 und 27 zu berechnen, den Lampen-Betriebsgeräten 24 und 28 zuzuordnen.

Das Erzeugen der Dimmsignale in Abhängigkeit von dem Außenlicht erfolgt anhand eines Algorithmusses mit bestimmten Kennlinien. Diese Kennlinien tragen dabei der Anordnung des Raumes und seiner Fenster sowie den Wünschen der Helligkeitssteuerung Rechnung und berücksichtigen beispielsweise, ob der Raum zum Arbeiten oder für Präsentationen (Dia-Shows etc.) genutzt werden soll. Beispielsweise können hierdurch bestimmte Beleuchtungsszenarien realisiert werden. Derartige Algorithmen, die in Abhängigkeit von der Intensität und Richtungsabhängigkeit des Außenlichts Dimmsignale für Leuchten erzeugen, sind bereits bekannt und sollen daher im Folgenden nicht weiter erläutert werden. Gegenstand der vorliegenden Erfindung ist in erster Linie, die zum Erzeugen der gewünschten Dimmsignale benötigten Informationen über das Außenlicht auf eine möglichst einfache Weise zu erhalten. Dies soll nachfolgend erläutert werden.

Bei der Bestimmung des richtungsabhängigen Außenlichts ist zu berücksichtigen, daß dessen momentane Intensität und Richtungsabhängigkeit an einem bestimmten Punkt der Erdoberfläche wesentlich von astronomischen und meteorologischen Größen abhängig ist, wie die in den Fig. 4 bis 6 dargestellten Beispiele zeigen.

Dabei wird das zur Verfügung stehende Tageslicht in erster Linie von dem aktuellen Stand der Sonne 32 beeinflußt. Der Sonnenstand wiederum ist von dem Datum, der Uhrzeit und der geographischen Lage abhängig und kann bei Kenntnis dieser drei Parameter mit Hilfe eines sog. Himmelsmodels theoretisch berechnet werden. Dieser Sonnenstand wird im wesentlichen durch den Sonnenhöhenwinkel, der dem Winkel zwischen dem Horizont und dem Sonnenmittelpunkt entspricht, sowie dem Sonnenazimutwinkel, der dem Winkel zwischen der geographischen Nordrichtung und dem Vertikalkreis durch den Sonnenmittelpunkt entspricht, definiert. Darüber hinaus ist die Intensität des Tageslichtes auch von dem Abstand der Sonne zur Erde abhängig, wobei dieser Abstand bei Kenntnis des Datums ebenfalls bekannt ist.

Die auf der Erde und damit auch auf den Tageslichtmeßkopf auftreffende Sonnenstrahlung bzw. das an einem bestimmten Ort vorliegende Tageslicht setzt sich aus der durch die Atmosphäre geschwächten direkten Sonnenstrahlung S_{d} sowie einer in der Atmosphäre diffus gestreuten Streustrahlung Sₛₜᵣ zusammen. Die Streuung und damit Dämpfung des Sonnenlichts erfolgt grundsätzlich durch in der Atmosphäre vorhandene Luftmoleküle oder Dunstpartikel, u.a. allerdings auch durch Wolken oder Nebel.

Fig. 4 zeigt zunächst die Lichtverhältnisse bei einem klaren Himmel. Hier besteht das auf den Meßkopf 1,11 einfallende Außenlicht zum überwiegenden Teil aus der von der Sonne 32 einfallenden Direkteinstrahlung S_{d}, die durch den klaren Himmel gegenüber der von der Sonne 32 ursprünglich emittierten Direktstrahlung S₀ nur geringfügig gedämpft wurde, sowie zu einem geringen Anteil aus einer von allen Seiten einfallenden Streustrahlung Sₛₜᵣ. Dementsprechend wird der Raum 21 zunächst über das der Sonne 32 zugewandte Fenster 22 verhältnismäßig stark durch die Sonnen-Direkteinstrahlung S_{d} erhellt. Da sich hingegen das Fenster 26 des Raumes 25 an einer der Sonne 32 abgewandten Seite des Gebäudes 20 befindet, wird dieser Raum 25 im Gegensatz zum Raum 21 durch die Sonne 32 nicht direkt erhellt. Dennoch wird dieser Raum 25 zumindest durch die aus sämtlichen Richtungen eintreffende Streustrahlung Sₛₜᵣ erhellt, die allerdings bei klarem Himmel im Vergleich zur Direktstrahlung S_{d} deutlich weniger intensiv ist. Die richtungsunabhängige Streustrahlung Sₛₜᵣ erhellt im übrigen zusätzlich zur Direktstrahlung S_{d} auch den ersten Raum 21.

In dem in Fig. 5 dargestellten zweiten Beispiel hat sich der Sonnenstand gegenüber Fig. 4 derart verändert, daß die Sonnen-Direkteinstrahlung S_{d} nunmehr aus einer anderen Richtung erfolgt, so daß nun das Fenster 22 des ersten Raumes 21 im Schatten liegt, während das Fenster 26 des zweiten Raumes 25 direkt von der Sonne 32 bestrahlt werden kann. Dementsprechend wird nun der Raum 21 lediglich durch die Streustrahlung Sₛₜᵣ erhellt, während sich das Außenlicht für den Raum 25 aus der Direktstrahlung S_{d} und der Streustrahlung Sₛₜᵣ zusammensetzt. Die auf den Tageslichtmeßkopf 1, 11 einfallende Gesamtstrahlung, die sich aus der Direktstrahlung S_{d} und der Streustrahlung Sₛₜᵣ zusammensetzt, ist allerdings im wesentlichen gleich groß wie bei dem in Fig. 4 dargestellten Beispiel.

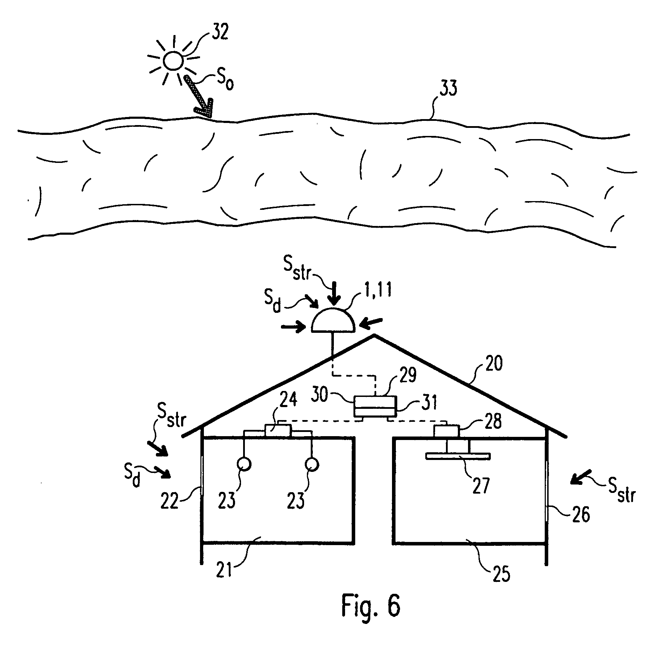

Bei dem dritten in Fig. 6 dargestellten Beispiel entspricht der Sonnenstand im wesentlichen dem Sonnenstand in Fig. 4. Allerdings wird nun die Sonne 32 von einer Wolkenschicht 33 verdeckt, welche die von der Sonne 32 ursprünglich emittierte Direktstrahlung S₀ auf einen niedrigeren und auf den Tageslichtmeßkopf 1, 11 auftreffenden Wert S_{d} reduziert. Neben einer Dämpfung der Direktstrahlung bewirkt allerdings die Wolkenschicht 33 eine starke Streuung des Sonnenlichts, so daß die Intensität der Streustrahlung Sₛₜᵣ zunimmt. Da diese Streustrahlung richtungsunabhängig ist, werden die beiden Räume 21 und 25 im wesentlichen gleich stark erhellt. Die auf den Tageslichtmeßkopf 1, 11 einfallende Gesamtstrahlung ist nunmehr allerdings deutlich geringer als bei dem in Fig. 4 dargestellten Beispiel.

Um geeignete Dimmsignale für die Leuchten 23 und 27 in den Räumen 21 und 25 erzeugen zu können, ist die Kenntnis über die Intensität und Einfallsrichtung der Direktstrahlung S_{d} sowie die Intensität der richtungsunabhängigen Streustrahlung Sₛₜᵣ notwendig. Sind diese Informationen bekannt, kann dann unter Berücksichtigung der Anordnung der Räume und ihrer Fenster ein geeigneter Stellwert für die Leuchten erzeugt werden. Die Informationen über das richtungsabhängige Außenlicht können beispielsweise durch in die verschiedenen Himmelsrichtungen ausgerichtete Helligkeitssensoren und somit durch eine direkte Messung erhalten werden. Gemäß der vorliegenden Erfindung kann allerdings auch eine Abschätzung für die Zusammensetzung (Intensität und Richtungsabhängigkeit) des Außenlichts mit Hilfe einer Messung der globalen Gesamthelligkeit sowie evtl. einer Zusatzmessung erhalten werden. Dies soll im folgenden erläutert werden.

Grundsätzlich ist festzuhalten, daß der Stand der Sonne bei Kenntnis der entsprechenden Informationen (Datum, Zeit und geographische Lage) berechnet werden kann. Dementsprechend ist auch die Einfallsrichtung der direkten Sonnenstrahlung bekannt. Damit besteht das Problem in erster Linie darin, das Verhältnis zwischen der Direktstrahlung und der Streustrahlung zu bestimmen. Dieses Verhältnis kann allerdings zumindest mit einer zufriedenstellenden Genauigkeit abgeschätzt werden, wenn der Zustand des Himmels bekannt ist. Entsprechend den in den Fig. 4 bis 6 dargestellten Beispielen besteht nämlich ein Zusammenhang zwischen dem Himmelszustand und dem Verhältnis zwischen Direktstrahlung und Streustrahlung darin, daß bei zunehmend bedecktem Himmel eine größere Streuung des Sonnenlichts erfolgt und dementsprechend der Anteil der richtungsunabhängigen Streustrahlung im Verhältnis zur Direktstrahlung zunimmt. Dementsprechend muß in einem ersten Schritt festgestellt werden, ob der Himmel klar, teilweise oder vollständig bedeckt ist bzw. wie groß die durch die Bewölkung verursachte Dämpfung der Sonnen-Direkteinstrahlung ist.

Gemäß einer ersten Variante wird der Zustand des Himmels bzw. die Dämpfung der Sonnen-Direkteinstrahlung auf Grundlage einer einzigen Messung abgeschätzt. Hierfür kann beispielsweise der in Fig. 1 dargestellte Meßkopf 1 verwendet werden, der lediglich einen einzigen Helligkeitssensor 6 enthält. Die Anordnung dieses Sensors 6 ist derart, daß sowohl die auf den Meßkopf 1 fallende Direktstrahlung als auch die Streustrahlung und damit die globale Gesamthelligkeit erfaßt wird.

Ob der Himmel nun bedeckt ist oder nicht, wird anhand eines Vergleichs mit einem Referenzwert bestimmt. Als Referenzwert wird vorzugsweise die Gesamthelligkeit bei klarem Himmel verwendet, wobei dieser Wert unter Berücksichtigung der oben genannten Zeit- und Ortsinformationen sowie der Eigenschaften des Sensors 6 und der Abdeckung 4 theoretisch berechnet oder zumindest abgeschätzt (die Berechnungen hierfür sind beispielsweise in der DIN 5034 angegeben) oder mit Hilfe von Messungen empirisch bestimmt werden kann. Ist der von dem Helligkeitssensor erfaßte Helligkeitswert in etwa gleich groß wie der Referenzwert, so kann davon ausgegangen werden, daß ein wolkenloser bzw. klarer Himmel vorliegt. Liegt hingegen der gemessene Wert deutlich unterhalb des Referenzwerts, so kann davon ausgegangen werden, daß der Himmel bedeckt ist. Die Differenz zwischen dem Referenzwert und dem gemessenen Wert kann somit als Maß für die Dämpfung bzw. Wolkendichte herangezogen werden.

Die auf diese Weise bestimmte Dämpfung wird nun verwendet, um den Anteil der Streustrahlung und der Direktstrahlung an der Gesamthelligkeit abzuschätzen, wobei der allgemeinste Zusammenhang darin besteht, daß der Anteil der Streustrahlung bei zunehmender Wolkendichte bzw. Dämpfung zunimmt. Zu berücksichtigen ist ferner, daß aufgrund der Streuung des Sonnenlichts in der Atmosphäre die Streustrahlung immer einen gewissen Mindestanteil an der Gesamthelligkeit hat. Somit wird aufgrund der Differenz zwischen der theoretischen bzw. empirisch bestimmten Gesamthelligkeit und der gemessenen Gesamthelligkeit ein zwischen einen Minimalwert und einem Maximalwert liegender Anteil der Streustrahlung an der Gesamthelligkeit bestimmt. Da ferner die Intensität der tatsächlich vorliegenden Gesamthelligkeit gemessen wurde, kann nunmehr die Intensität der richtungsunabhängigen Streustrahlung sowie der richtungsabhängigen Direktstrahlung (deren Richtung ja bekannt ist) bestimmt werden.

Die soeben beschriebene Abschätzung wird von der Auswerteeinheit 30 der Steuer- bzw. Regelvorrichtung 29 durchgeführt. Die dadurch erhaltenen Informationen über das Außenlicht werden dann von der Regeleinheit 31 in entsprechende Dimmsignale umgesetzt. Hierdurch kann auf einfache Weise eine das Außenlicht berücksichtigende Regelung der Leuchten 23 und 27 erzielt werden. Insbesondere ist der materielle Aufwand hierfür äußerst gering, da der Meßkopf 1 sehr einfach aufgebaut ist. Die beschriebene Vorgehensweise ermöglicht zwar lediglich eine Abschätzung der Zusammensetzung des Außenlichts, die damit erzielte Genauigkeit ist allerdings für einen Großteil der Anwendungen ausreichend.

Aus der Beschreibung der ersten Variante des erfindungsgemäßen Verfahrens wird deutlich, daß ein wesentlicher Punkt Verfahrens darin besteht, den Himmelszustand zu klassifizieren bzw. die Dichte der Wolken und damit die durch die Bewölkung verursachte Dämpfung der Sonnen-Direktstrahlung abzuschätzen. In der ersten Variante erfolgt dies durch einen Vergleich eines gemessenen Helligkeitswertes mit einem theoretisch berechneten oder empirisch bestimmten Referenzwert. Um die Zulässigkeit dieser Abschätzung zu erhöhen, kann der in den Fig. 2 und 3 dargestellte zweite Meßkopf verwendet werden, der insgesamt vier Sensoren 16 und 19₁ bis 19₃ aufweist.

Aufgrund der Anordnung der drei horizontal ausgerichteten Sensoren 19₁ bis 19₃ kann zur Klassifizierung des Himmels zusätzlich ein Vergleich der Meßwerte dieser drei Sensoren 19₁ bis 19₃ herangezogen werden. Da ein typisches Kennzeichen eines bedeckten Himmels ist, daß das Außenlicht im wesentlichen durch die sich in alle Richtungen gleichmäßig ausbreitende Streustrahlung gebildet wird, kann für den Fall, daß alle drei Sensoren im wesentlichen die gleiche Helligkeit messen, von einem bedeckten Himmel ausgegangen werden.

Darüber hinaus kann für jeden Zeitpunkt berechnet werden, welcher der drei horizontal orientierten Sensoren der Sonne am meisten zugewandt ist bzw. welcher Sensor mit Sicherheit verschattet ist. Liefert nun der verschattete Sensor einen größeren Wert als die beiden anderen Sensoren, so ist dies ein sicherer Hinweis dafür, daß ein bedeckter oder zumindest im Bereich der Sonne stark bewölkter Himmel vorliegt. Ist hingegen der von dem der Sonne zugewandten Sensor erfaßte Helligkeitswert deutlich größer als der Meßwert des im Schatten liegenden Sensors, so kann mit großer Wahrscheinlichkeit von einem klaren Himmel und damit einer direkten Bestrahlung des Tageslichtmeßkopfes ausgegangen werden. Darüber hinaus kann der Meßwert des oberen Sensors 16 mit den Werten der horizontal ausgerichteten Sensoren verglichen werden, um den Grad der Bewölkung des Himmels bzw. die Dämpfung festzustellen.

Diese zweite Variante ermöglicht somit mit größerer Genauigkeit die Feststellung des Himmelszustandes. Analog zu der zuerst beschriebenen Variante kann dann bei Kenntnis des Himmelszustands bzw. der Bewölkungsdichte oder Dämpfung der Anteil der direkten Sonnenstrahlung und der Streustrahlung ermittelt und dementsprechend die Intensität und Richtungsabhängigkeit des Außenlichts berechnet werden.

Das erfindungsgemäße Verfahren bietet insgesamt die Möglichkeit, den Zustand des Himmels mit einem geringen Aufwand festzustellen und die zur Helligkeitsregelung benötigten Informationen über das Außenlicht zu erhalten. Insbesondere kann dies durch einen sehr einfach aufgebauten Tageslichtmeßkopf erreicht werden, der kostengünstig hergestellt werden kann und aufgrund des einfachen Aufbaus auch deutlich weniger störanfällig ist.

## Patentansprüche

1. Verfahren zum Steuern oder Regeln der Helligkeit in einem mit Innenlicht und Außenlicht beleuchteten Raum (21, 25), wobei in Abhängigkeit von der richtungsabhängigen Außenlicht-Intensität ein Helligkeits-Sollwert für eine innerhalb des Raumes (21, 25) angeordnete Beleuchtungsanlage (23, 27) erzeugt wird,
**dadurch gekennzeichnet,**
**daß** zum Ermitteln der richtungsabhängigen Außenlicht-Intensität folgende Schritte durchgeführt werden:
a) Feststellen der durch Bewölkung (33) verursachten Dämpfung der Sonnen-Direkteinstrahlung (S₀),
b) Ermitteln der richtungsabhängigen gedämpften Sonnen-Direkteinstrahlung (S_{d}) in Abhängigkeit von der Dämpfung, und
c) Ermitteln der richtungsunabhängigen Streustrahlung (Sₛₜᵣ) in Abhängigkeit von der Dämpfung.

2. Verfahren nach Anspruch 1,
**dadurch gekennzeichnet,**
**daß** zum Feststellen der durch Bewölkung (33) verursachten Dämpfung ein Außenlicht-Istwert erfaßt und mit einem Referenzwert verglichen wird.

3. Verfahren nach Anspruch 2,
**dadurch gekennzeichnet,**
**daß** der Referenzwert dem einfallendem Außenlicht bei klarem Himmel entspricht.

4. Verfahren nach Anspruch 3,
**dadurch gekennzeichnet,**
**daß** der Referenzwert unter Berücksichtigung der Zeit, des Datums und der geographischen Position berechnet wird.

5. Verfahren nach einem der Ansprüche 2 bis 4,
**dadurch gekennzeichnet,**
**daß** zum Erfassen des Außenlicht-Istwerts das aus einer Richtung bzw. aus einem Bereich einfallende Außenlicht gemessen wird.

6. Verfahren nach einem der Ansprüche 2 bis 4,
**dadurch gekennzeichnet,**
**daß** der erfaßte Außenlicht-Istwert der globalen Helligkeit entspricht und das aus allen Richtungen einfallende Außenlicht berücksichtigt.

7. Verfahren nach Anspruch 6,
**dadurch gekennzeichnet,**
**daß** zusätzlich zu der globalen Helligkeit eine horizontale Komponente des Außenlichts erfaßt wird.

8. Verfahren nach Anspruch 7,
**dadurch gekennzeichnet,**
**daß** das aus drei Richtungen, die jeweils einen Winkel von 120° einschließen, einfallende Außenlicht erfaßt wird.

9. Verfahren nach Anspruch 7 oder 8,
**dadurch gekennzeichnet,**
**daß** die Dämpfung zusätzlich auf Grundlage eines Vergleichs zwischen der globalen Helligkeit und der horizontalen Komponente des Außenlichts bestimmt wird.

10. Verfahren nach einem der vorherigen Ansprüche,
**dadurch gekennzeichnet,**
**daß** die Richtung der Direktstrahlung (S_{d}) unter Berücksichtigung der Zeit, des Datums und der geographischen Position berechnet wird.

11. Einrichtung zum Steuern oder Regeln der Helligkeit in einem mit Innenlicht und Außenlicht beleuchteten Raum (21, 25), mit einer Außenlicht-Meßvorrichtung (1, 11), einer Beleuchtungsanlage (23, 27) für den Raum (21, 25) und einer Steuer- bzw. Regelvorrichtung (29), welche mit der Außenlicht-Meßvorrichtung (1, 11) verbunden ist und in Abhängigkeit von der richtungsabhängigen Außenlicht-Intensität einen Steuer- oder Regelwert für die Beleuchtungsanlage (21, 25) erzeugt,
**dadurch gekennzeichnet,**
**daß** die Außenlicht-Meßvorrichtung (1, 11) aus dem aus einer Richtung oder aus einem Bereich einfallendem Außenlicht einen Außenlicht-Istwert bildet und
**daß** die Steuer- bzw. Regelvorrichtung (29) auf Basis eines Vergleichs dieses Außenlicht-Istwerts mit einem unter Berücksichtigung der Zeit, des Datums und der geographischen Position erstellten Referenzwert die richtungsabhängige Außenlicht-Intensität ermittelt und den Steuer- oder Regelwert für die Beleuchtungsanlage (23, 27) erzeugt.

12. Einrichtung nach Anspruch 11,
**dadurch gekennzeichnet,**
**daß** die Außenlicht-Meßvorrichtung (1, 11) einen Helligkeitssensor (6, 16) aufweist, der auf einer horizontal angeordneten Oberfläche angeordnet ist, wobei die Steuer- bzw. Regelvorrichtung (29) auf Grundlage des von dem Helligkeitssensors (6, 16) erfaßten Außenlicht-Istwerts die richtungsabhängige Außenlicht-Intensität ermittelt.

13. Einrichtung nach Anspruch 12,
**dadurch gekennzeichnet,**
**daß** die Außenlicht-Meßvorrichtung (11) drei weitere Helligkeitssensoren (19₁-19₃) aufweist, die horizontal ausgerichtet und in einer Dreiecksanordnung angeordnet sind, wobei die Steuer- bzw. Regelvorrichtung (29) die von diesen drei weiteren Helligkeitssensoren (19₁-19₃) erfaßten Helligkeitswerte bei der Ermittlung der richtungsabhängigen Außenlicht-Intensität berücksichtigt.

14. Einrichtung nach Anspruch 13,
**dadurch gekennzeichnet,**
**daß** der erste Helligkeitssensor (16) im Zentrum des durch die drei horizontal ausgerichteten Helligkeitssensoren (19₁-19₃) gebildeten Dreiecks angeordnet ist.

15. Einrichtung nach Anspruch 13 oder 14,
**dadurch gekennzeichnet,**
**daß** die weiteren Helligkeitssensoren (19₁-19₃) jeweils ein Blende (18₁-18₃) aufweisen.

16. Einrichtung nach einem der Ansprüche 12 bis 15,
**dadurch gekennzeichnet,**
**daß** der bzw. die Helligkeitssensoren (6, 16, 19₁-19₃) unter einer diffusen Abdeckung (4, 14) angeordnet sind.

17. Einrichtung nach Anspruch 16,
**dadurch gekennzeichnet,**
**daß** zumindest ein Teil der Abdeckung (4, 14) eine halbkugelförmige Oberfläche aufweist, wobei der erste Helligkeitssensor (6, 16) im Zentrum der Halbkugel angeordnet ist.

## Claims

1. Method for the control or regulation of the brightness in a room (25) illuminated with interior light and outside light, wherein in dependence upon the direction dependent outside light intensity there is generated a brightness desired value for an illumination facility (23, 27) arranged within the room (21, 25)
**characterized in that**,
for the determination of the direction dependent outside light intensity the following steps are carried out:
a) establishing the damping of the direct sunlight (S₀) due to cloud,
b) determining the direction dependent damped direct sunlight (S_{d}) in dependence upon the damping, and
c) determining the direction independent scattered light (Sₛₜᵣ) in dependence upon the damping.

2. Method according to claim 1,
**characterized in that**,
for establishing the damping caused by cloud (33), an outside light actual value is detected and compared with a reference value.

3. Method according to claim 2,
**characterized in that**,
the reference value corresponds to the incident outside light with clear sky.

4. Method according to claim 3,
**characterized in that**,
the reference value is calculated taking into account the time, the date and the geographical position.

5. Method according to any of claims 2 to 4,
**characterized in that**,
for detecting the outside light actual value the outside light incident from one direction or from one region is measured.

6. Method according to any of claims 2 to 4,
**characterized in that**,
the detected outside light actual value corresponds to the global brightness and takes into account the outside light incident from all directions.

7. Method according to claim 6,
**characterized in that**,
in addition to the global brightness, a horizontal component of the outside light is detected.

8. Method according to claim 7,
**characterized in that**,
the outside light incident from three directions, each including an angle of 120°, is detected.

9. Method according to claim 7 or 8,
**characterized in that**,
the damping is additionally determined on the basis of a comparison between the global brightness and the horizontal component of the outside light.

10. Method according to any preceding claim,
**characterized in that**,
the direction of the direct light (S_{d}) is calculated taking into account the time, the date and the geographical position.

11. Arrangement for the control or regulation of the brightness in a room (21, 25) illuminated with interior light and outside light, having an outside light measurement device (1, 11), an illumination facility (23, 27) for the room (21, 25) and a control or regulation device (29) which is connected with the outside light measurement device (1, 11) and in dependence upon the direction dependent outside light intensity generates a control or regulation value for the illumination facility (21, 25),
**characterized in that**,
the outside light measurement device (1, 11) forms an outside light actual value from the incident outside light from one direction or from one region and **in that** the control or regulation device (29), on the basis of a comparison of this outside light actual value with a reference value, provided taking into account the time, the date and the geographical position, detects the direction dependent outside light intensity and generates the control or regulation value for the illumination facility (23, 27).

12. Arrangement according to claim 11,
**characterized in that**,
the outside light measurement device (1, 11) has a brightness sensor (6, 16) which is arranged on a horizontally arranged surface, wherein the control or regulation device (29) determines the direction dependent outside light intensity on the basis of the outside light actual value detected by the brightness, sensor (6, 16).

13. Arrangement according to claim 12,
**characterized in that**,
the outside light measurement device (11) has three further brightness sensors (19₁-19₃) which are horizontally directed and arranged in a triangular arrangement, wherein the control or regulation device (29) takes into account the brightness values detected by these three further brightness sensors (19₁-19₃) in the determination of the direction dependent outside light intensity.

14. Arrangement according to claim 13,
**characterized in that**,
the first brightness sensor (16) is arranged in the centre of the triangle formed by the three horizontally directed brightness sensors (19₁-19₃).

15. Arrangement according to claim 13 or 14,
**characterized in that**,
the further sensors (19₁-19₃) each have a diaphragm (18₁-18₃).

16. Arrangement according to any of claims 12 to 15,
**characterized in that**,
the brightness sensor or sensors (6, 16, 19₁-19₃) are arranged under a diffuse cover (4, 14).

17. Arrangement according to claim 16,
**characterized in that**,
at least a part of the cover (4, 14) has a hemispherical surface, wherein the first brightness sensor (6, 16) is arranged at the centre of the hemisphere.

## Revendications

1. Procédé pour commander ou régler la luminosité dans une pièce (21, 25) éclairée par une lumière intérieure et une lumière extérieure, selon lequel en fonction de l'intensité de la lumière extérieure qui dépend de la direction, une valeur de consigne de la luminosité est produite pour une installation d'éclairage (23, 27) disposée à l'intérieur de la pièce (21, 25),
**caractérisé en ce**
**que** pour la détermination de l'intensité de la lumière extérieure, qui dépend de la direction, on exécute les étapes suivantes:
a) on détermine l'atténuation, provoquée par l'ennuagement (33), du rayonnement solaire direct (S₀),
b) on détermine le rayonnement solaire direct atténué (S_{d}), qui dépend de la direction, en fonction de l'atténuation, et
c) on détermine le rayonnement dispersé (Sₛₜᵣ), qui est indépendant de la direction, en fonction de l'atténuation.

2. Procédé selon la revendication 1, **caractérisé en ce que** pour la détermination de l'atténuation provoquée par l'ennuagement (33) une valeur réelle de la lumière extérieure est détectée et comparée à une valeur de référence.

3. Procédé selon la revendication 2, **caractérisé en ce que** la valeur de référence correspond à la lumière extérieure incidente dans le cas d'un ciel clair.

4. Procédé selon la revendication 3, **caractérisé en ce que** la valeur de référence est calculée en tenant compte de l'heure, de la date et de la position géographique.

5. Procédé selon l'une des revendications 2 à 4, **caractérisé en ce que** pour la détection de la valeur réelle de la lumière extérieure, on mesure la lumière extérieure qui arrive dans une direction ou provient d'une zone.

6. Procédé selon l'une des revendications 2 à 4, **caractérisé en ce que** la valeur réelle détectée de la lumière extérieure correspond à la luminosité globale et la lumière extérieure, qui arrive dans toutes les directions, est prise en compte.

7. Procédé selon la revendication 6, **caractérisé en ce qu'**en plus de la luminosité globale, on détecte une composante horizontale de la lumière extérieure.

8. Procédé selon la revendication 7, **caractérisé en ce qu'**on détecte la lumière extérieure qui arrive dans trois directions, qui font entre elles respectivement un angle de 120°.

9. Procédé selon la revendication 7 ou 8, **caractérisé en ce que** l'atténuation est déterminée en outre sur la base d'une comparaison entre la luminosité globale et la composante horizontale de la lumière extérieure.

10. Procédé selon l'une des revendications précédentes, **caractérisé en ce que** la direction du rayonnement direct (S_{d}) est calculée en tenant compte de l'heure, de la date et de la position géographique.

11. Dispositif pour commander ou régler la luminosité dans une pièce (21, 25) éclairée par une lumière intérieure et une lumière extérieure, comportant un dispositif (1, 11) de mesure de la lumière extérieure, une installation d'éclairage (23, 27) pour la pièce (21, 25) et un dispositif de commande et de régulation (29), qui est relié au dispositif (1, 11) de mesure de la lumière extérieure et produit, en fonction de l'intensité de la lumière extérieure, qui dépend de la direction, une valeur de commande ou de régulation pour l'installation d'éclairage (21, 25),
**caractérisé en ce**
**que** le dispositif (1, 11) de mesure de la lumière extérieure forme une valeur réelle de la lumière extérieure à partir de la lumière extérieure arrivant dans une direction ou provenant d'une source, et
**que** le dispositif de commande ou de régulation (29) détermine, sur la base d'une comparaison de cette valeur réelle de la lumière extérieure avec une valeur de référence déterminée en tenant compte de l'heure, de la date et de la position géographique, l'intensité de la lumière extérieure, qui dépend de la direction, et produit la valeur de commande ou de régulation pour l'installation d'éclairage (23, 27).

12. Dispositif selon la revendication 11, **caractérisé en ce que** le dispositif (1, 11) de mesure de la lumière extérieure possède un capteur de luminosité (6, 16), qui est disposé sur une surface disposée horizontalement, le dispositif de commande ou de régulation (29) déterminant l'intensité de la lumière extérieure, qui dépend de la direction, sur la base de la valeur réelle de la lumière extérieure détectée par le capteur de luminosité (6, 16).

13. Dispositif selon la revendication 12, **caractérisé en ce que** le dispositif (11) de mesure de la lumière extérieure comporte trois autres capteurs de luminosité (19₁ - 19₃) qui sont orientés horizontalement et sont disposés selon une disposition en triangle, le dispositif de commande ou de régulation (29) prenant en compte les valeurs de luminosité, détectées par ces trois autres capteurs de luminosité (19₁ - 19₃), lors de la détermination de l'intensité de la lumière extérieure, qui dépend de la direction.

14. Dispositif selon la revendication 13, **caractérisé en ce que** le premier capteur de luminosité (16) est disposé au centre du triangle formé par les trois capteurs de luminosité orientés horizontalement (19₁ - 19₃) .

15. Dispositif selon la revendication 13 ou 14, **caractérisé en ce que** les autres capteurs de luminosité (19₁ - 19₃) comportent chacun un diaphragme (18₁ - 18₃).

16. Dispositif selon l'une des revendications 12 à 15, **caractérisé en ce que** le ou les capteurs de luminosité (6, 16, 19₁ - 19₃) sont disposés sous un élément de recouvrement diffus (4, 14).

17. Dispositif selon la revendication 16, **caractérisé en ce qu'**au moins une partie de l'élément de recouvrement (4, 14) possède une surface de forme hémisphérique, le premier capteur de luminosité (6, 16) étant disposé au centre de la demi-sphère.
